# EUROPÄISCHE PATENTSCHRIFT

(11) **EP 2 942 572 B1**
(45) Veröffentlichungstag und Bekanntmachung des Hinweises auf die Patenterteilung: **08.08.2018**
(21) Anmeldenummer: 14167526.4
(22) Anmeldetag: 08.05.2014
(51) Int. Cl.: F24D 19/00, F24D 3/14

(54) **Heizkörper**
Heater
Radiateur

(43) Veröffentlichungstag der Anmeldung: 11.11.2015
(73) Patentinhaber: Ribe Jern Holding A/S, 6760 Ribe (DK)
(72) Erfinder: Olesen, Michael Boel, 6650 Brorup (DK)
(74) Vertreter: Lösch, Christoph Ludwig Klaus

(56) Entgegenhaltungen:
- DE-A1- 4 017 689
- DE-U1- 9 401 395
- DE-U1-202013 104 887

## Beschreibung

Die Erfindung betrifft einen Heizkörper.

Heizkörper dienen im Allgemeinen zur Erwärmung von Gebäudeteilen bzw. Räumen und weisen typischerweise ein Heizwasserkanalsystem auf, innerhalb dessen Heizwasser zirkulieren kann. Das benötigte Heizwasser wird durch ein gebäudeseitiges Heizrohrsystem zur Verfügung gestellt. Genauer tritt das Heizwasser durch einen Heizwasserzulauf in den Heizkörper ein, erwärmt diesen und tritt anschließend durch einen Heizwasserauslass wieder aus dem Heizkörper aus.

Da die Dichte des Heizwassers mit zunehmender Temperatur typischerweise abnimmt, werden herkömmliche Heizkörper in Gravitationsrichtung gesehen oben wärmer als unten. Dies ist aus bauphysikalischen Gründen und/oder Wohlbefindlichkeitsgründen jedoch manchmal unerwünscht (insbesondere wenn sich der Heizkörper unter einem Fenster befindet, aber auch wenn sich der Heizkörper in der Wand oder seitlich im Rahmen, z.B. im Rahmen einer Fensternische, befindet). DE 20 2013 104 887 U1 beschreibt einen Heizkörper mit einem einzigen Heizsegment und einem Heizwasserkanalsystem, innerhalb dessen Heizwasser von einem Heizwasserzulauf zu einem Heizwasserauslass transportierbar ist.

Der Erfindung liegt die Aufgabe zugrunde, einen Heizkörper anzubieten, der ein stärkeres Erwärmen von in Gravitationsrichtung gesehen weiter unten gelegen Teilbereichen als weiter oben gelegenen Teilbereichen ermöglicht.

Diese Aufgabe wird durch einen Heizkörper mit den Merkmalen des Anspruchs 1 oder 5 gelöst. Vorteilhafte Ausführungsformen sind in den Unteransprüchen beschrieben.

Der erfindungsgemäße Heizkörper besitzt ein Heizwasserkanalsystem, innerhalb dessen Heizwasser von einem Heizwasserzulauf zu einem Heizwasserauslass transportierbar ist. Das Heizwasserkanalsystem des Heizkörpers weist Heizsegmente mit jeweils einem innenliegenden Hohlraum zur Aufnahme von Heizwasser auf, die in einem betriebsbereiten Zustand des Heizkörpers in Gravitationsrichtung gesehen übereinander angeordnet sind, und die jeweils eine Eingangsöffnung zur Zufuhr von Heizwasser sowie eine Ausgangsöffnung zur Abfuhr von Heizwasser aufweisen. Ferner weist das Heizwasserkanalsystem ein Verbindungsrohr auf, welches die Ausgangsöffnung eines ersten Heizsegments mit der Eingangsöffnung eines zweiten Heizsegments verbindet. Der Heizwasserzulauf ist an die Eingangsöffnung des ersten Heizsegments angeschlossen. Das zweite Heizsegment ist im betriebsbereiten Zustand des Heizkörpers in Gravitationsrichtung gesehen oberhalb des ersten Heizsegments angeordnet.

Unter "betriebsbereiten Zustand" des Heizkörpers wird hierbei der Zustand verstanden, in dem der Heizkörper an das bauseitige Heizrohrsystem angeschlossen ist, d.h. der Heizwasserzulauf mit einem Vorlauf des Heizrohrsystems verbunden ist und der Heizwasserauslass mit einem Rücklauf des Heizrohrsystems verbunden ist.

Die Begriffe "oben", "oberhalb", "oberer" usw. und "unten", "unterhalb", "oberer" usw. sind - soweit nicht anders erwähnt - als in Bezug auf die Gravitationsrichtung anzusehen.

Erfindungsgemäß tritt Heizwasser damit durch den Heizwasserzulauf in den Heizkörper ein. Da der Heizwasserzulauf an die Eingangsöffnung des ersten Heizsegments angeschlossen ist, wird zunächst das erste Heizsegment erwärmt und erst anschließend wird das Heizwasser durch das Verbindungsrohr dem zweiten Heizelement, das sich in Gravitationsrichtung gesehen oberhalb des ersten Heizsegments befindet, zugeleitet. Auf diese Weise ist es somit möglich, das erste Heizsegment auf eine höhere Temperatur zu erwärmen als das zweite Heizsegment. Erfindungsgemäß ist die Eingangsöffnung des ersten Heizsegments an einem in Gravitationsrichtung gesehenen oberen Ende des ersten Heizsegments ausgebildet. Die Zufuhr des Heizwassers erfolgt somit in einem oberen Bereich des ersten Heizsegments. Erfindungsgemäß ist die Ausgangsöffnung des ersten Heizsegments an einem in Gravitationsrichtung gesehenen unteren Ende des ersten Heizsegments ausgebildet. Erfindungsgemäß ist die Ausgangsöffnung des in Gravitationsrichtung gesehenen am weitesten oben angeordneten Heizsegments an den Heizwasserauslass angeschlossen. Auf diese Weise besitzt das obererste Heizsegment die geringste Temperatur aller Heizsegmente. Erfindungsgemäß ist das erste Heizelement das in Gravitationsrichtung gesehen unterste Heizelement. Dadurch besitzt das untererste Heizsegment die höchste Temperatur aller Heizsegmente.

In einer vorteilhaften Ausführungsform besitzen die Heizelemente jeweils die Form eines flachen Quaders. Auf diese Weise ist eine besonders gute Wärmeabstrahlung möglich.

In einer vorteilhaften Ausführungsform weist der Heizkörper ferner eine Blende auf, die sich über sämtliche Heizelemente erstreckt. Dadurch wird ein optisch einheitlicher Eindruck erzeugt. Erfindungsgemäß weisen die Heizkörper exakt zwei oder exakt drei Heizelementen auf. Heizkörper mit zwei Heizelementen sind konstruktiv einfach gestaltet. Heizkörper mit drei Heizelementen erlauben ein exakteres Einstellen des Temperaturverlaufs.

Besitzt der Heizkörper genau zwei Heizelemente, so ist die Eingangsöffnung des zweiten Heizelements an einem in Gravitationsrichtung gesehenen unteren Ende des zweiten Heizsegments ausgebildet und die Ausgangsöffnung des zweiten Heizelements an einem in Gravitationsrichtung gesehenen oberen Ende des zweiten Heizsegments ausgebildet und an den Heizwasserauslass angeschlossen.

Besitzt der Heizkörper genau drei Heizelemente, so ist die Eingangsöffnung des zweiten Heizelements an einem in Gravitationsrichtung gesehenen oberen Ende des zweiten Heizsegments ausgebildet, die Ausgangsöffnung des zweiten Heizelements an einem in Gravitationsrichtung gesehenen unteren Ende des zweiten Heizsegments ausgebildet, die Eingangsöffnung des dritten Heizelements an einem in Gravitationsrichtung gesehenen unteren Ende des dritten Heizsegments ausgebildet, die Ausgangsöffnung des dritten Heizelements an einem in Gravitationsrichtung gesehenen oberen Ende des dritten Heizsegments ausgebildet und an den Heizwasserauslass angeschlossen und ein weiteres Verbindungsrohr verbindet die Ausgangsöffnung des zweiten Heizsegments mit der Eingangsöffnung des dritten Heizsegments.

Die Erfindung ist anhand von Ausführungsbeispielen in den Zeichnungsfiguren weiter erläutert. Es zeigen:
- Fig. 1: eine perspektivische Vorderansicht einer ersten Ausführungsform eines Heizkörpers;
- Fig. 2: eine perspektivische Rückansicht des Heizkörpers aus Fig. 1;
- Fig. 3: eine vergrößerte Detailansicht des Bereichs A aus Fig. 2;
- Fig. 4: eine vergrößerte Detailansicht des Bereichs B aus Fig. 2;
- Fig. 5: eine vergrößerte Detailansicht des Bereichs C aus Fig. 2; und
- Fig. 6: eine schematische Rückansicht einer zweiten Ausführungsform eines Heizkörpers.

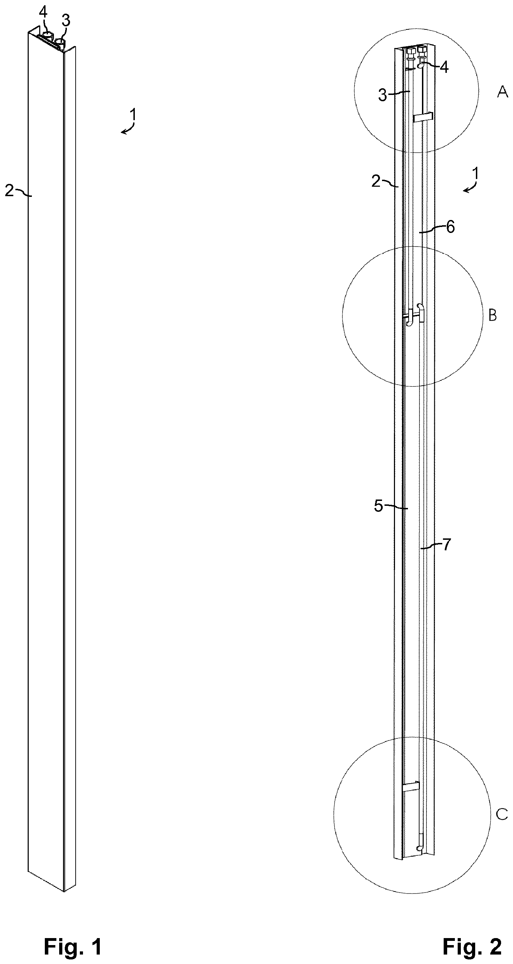

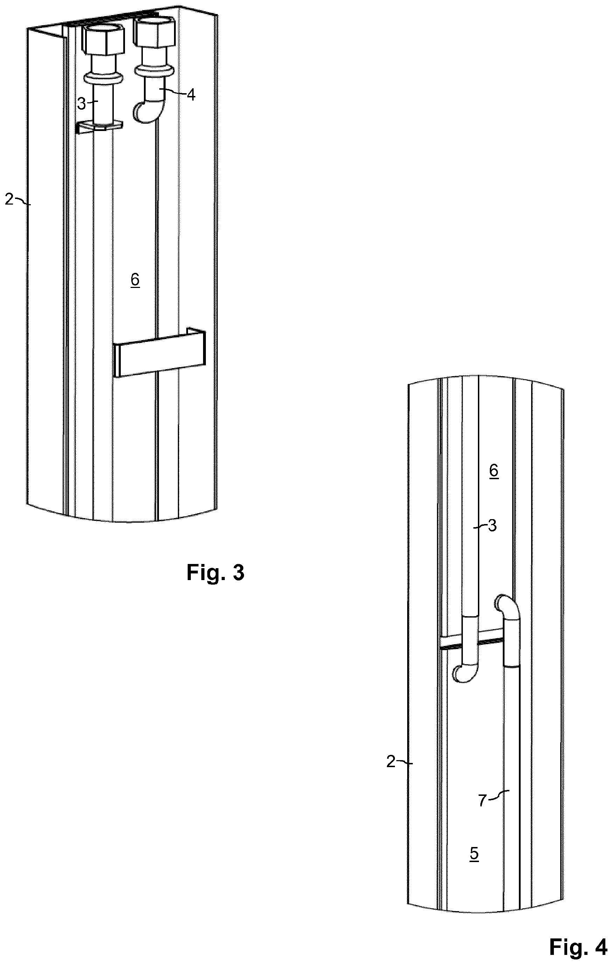

Fig. 1 bis Fig. 5 zeigen einen Heizkörper 1. Die Front sowie die Seitenflächen des Heizkörpers 1 sind mit einer Blende 2 bedeckt. Heizwasser kann durch einen Heizwasserzulauf (Heizwassereinlass) 3 in ein Heizwasserkanalsystem des Heizkörpers 1 einfließen und durch einen Heizwasserauslass 4 wieder abfließen. Innerhalb des Heizwasserkanalsystems ist somit Heizwasser vom Heizwasserzulauf 3 zum Heizwasserauslass 4 transportierbar.

Von der Blende 2 verdeckt werden zwei Heizsegmente 5 und 6. Jedes der Heizsegmente 5, 6 besitzt die Form eines flache Quaders und weist einen innenliegenden Hohlraum zur Aufnahme von Heizwasser auf. Jedes Heizsegment 5, 6 weist eine Eingangsöffnung zur Zufuhr von Heizwasser sowie eine Ausgangsöffnung zur Abfuhr von Heizwasser auf. Im betriebsbereiten Zustand des Heizkörpers 1 sowie in den Zeichnungsfiguren sind die Heizsegmente 5, 6 übereinander angeordnet.

Das Heizsegment 5 ist unterhalb des Heizsegments 6 angeordnet. Das Heizelement 5 stellt damit ein "erstes Heizelement" dar, während das Heizsegment 6 ein "zweites Heizelement" darstellt.

Die Eingangsöffnung des ersten Heizsegments 5 ist am oberen Ende des ersten Heizsegments 5 ausgebildet und ist mit dem Heizwasserzulauf 3 verbunden. Die Ausgangsöffnung des ersten Heizsegments 5 ist am unteren Ende des ersten Heizsegments 5 ausgebildet und über ein Verbindungsrohr 7 mit der Eingangsöffnung des zweiten Heizelements 6 verbunden. Die Eingangsöffnung des zweiten Heizelements 6 ist am unteren Ende des zweiten Heizelements 6 ausgebildet. Die Ausgangsöffnung des zweiten Heizelements 6 wiederum ist am oberen Ende des zweiten Heizelements 6 ausgebildet und mit dem Heizwasserauslass 4 verbunden.

Heizwasser mit hoher Temperatur, welches über den Heizwasserzulauf 3 zugeführt wird, fließt somit zunächst durch die Eingangsöffnung des ersten Heizsegments 5 in den innenliegenden Hohlraum des ersten Heizsegments 5 und erwärmt das Heizsegment 5 entsprechend. Anschließend fließt das Heizwasser über die Ausgangsöffnung des ersten Heizelements 5 in das Verbindungsrohr 7 und vom Verbindungsrohr 7 über die Eingangsöffnung des zweiten Heizsegments 6 in den innenliegenden Hohlraum des zweiten Heizsegments 6 und erwärmt das Heizsegment 6 entsprechend. Während des Durchgangs durch den Heizkörper 1 erniedrigt sich die Temperatur des Heizwassers durch Wärmeübertragung allmählich. Abschließend fließt das (nun entsprechend abgekühlte) Heizwasser über die Ausgangsöffnung des zweiten Heizsegments 6 und den Heizwasserauslass 4 wieder ab.

Das erste Heizsegment 5 befindet sich in Gravitationsrichtung gesehen weiter unten als das zweite Heizsegment 6 und wird mehr erwärmt als das sich weiter oben befindende zweite Heizsegment 6. Der Heizkörper 1 besitzt somit einen unteren Teilbereich (erstes Heizsegment 5), der wärmer ist als ein oberer Teilbereich (zweites Heizsegment 6).

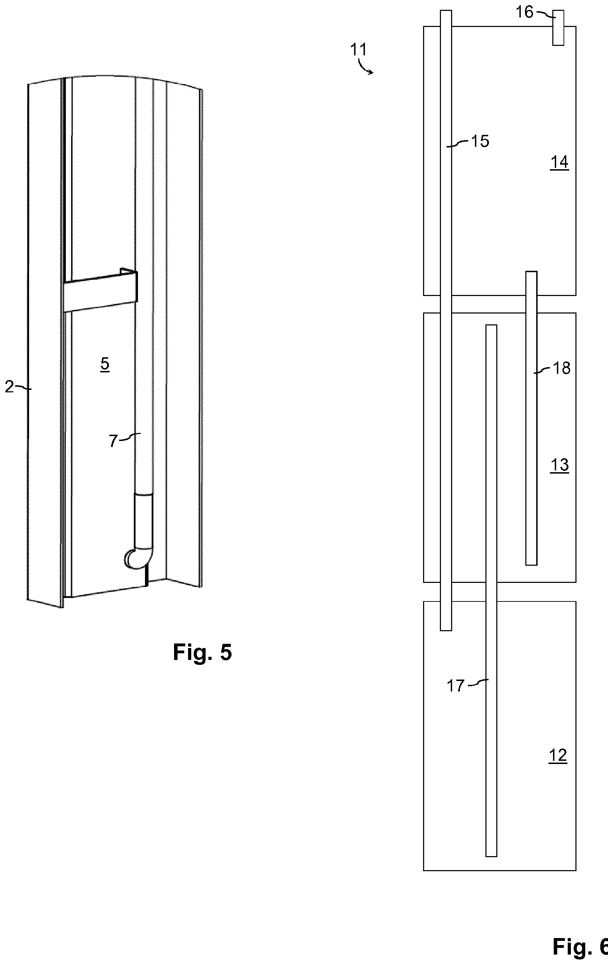

Fig. 6 zeigt eine schematische Rückansicht einer zweiten Ausführungsform. Der dort schematisch dargestellt Heizkörpers 11 weist insgesamt drei Heizsegmente 12, 13 und 14 auf.

Jedes der Heizsegmente 12, 13, 14 besitzt die Form eines flache Quaders und weist einen innenliegenden Hohlraum zur Aufnahme von Heizwasser auf. Jedes Heizsegment 12, 13, 14 weist eine Eingangsöffnung zur Zufuhr von Heizwasser sowie eine Ausgangsöffnung zur Abfuhr von Heizwasser auf. Im betriebsbereiten Zustand des Heizkörpers 11 sowie in den Zeichnungsfiguren sind die Heizsegmente 12, 13, 14 übereinander angeordnet. Das Heizsegment 12 ist hierbei das unterste Heizsegment. An das Heizsegment 12 schließt sich das Heizsegment 13 an. Das Heizsegment 14 ist das oberste Heizsegment.

Heizwasser kann durch einen Heizwasserzulauf 15 einfließen und durch einen Heizwasserauslass 16 wieder abfließen. Die Eingangsöffnung des Heizsegments 12 ist am oberen Ende des Heizsegments 12 ausgebildet und ist mit dem Heizwasserzulauf 15 verbunden. Die Ausgangsöffnung des Heizsegments 12 ist am unteren Ende des Heizsegments 12 ausgebildet und über ein Verbindungsrohr 17 mit der Eingangsöffnung des Heizelements 13 verbunden. Die Eingangsöffnung des Heizelements 13 ist am oberen Ende des Heizelements 13 ausgebildet. Die Ausgangsöffnung des Heizelements 13 wiederum ist am unteren Ende des Heizelements 13 ausgebildet und über ein weiteres Verbindungsrohr 18 mit der Eingangsöffnung des Heizelements 14 verbunden. Die Eingangsöffnung des Heizelements 14 ist am unteren Ende des Heizelements 14 ausgebildet. Die Ausgangsöffnung des Heizelements 14 wiederum ist am oberen Ende des Heizelements 14 ausgebildet und mit dem Heizwasserauslass 16 verbunden. Das Heizelement 12 stellt damit ein "erstes Heizelement", das Heizsegment 13 ein "zweites Heizelement" und das Heizelement 14 ein "drittes Heizelement" dar.

Heizwasser mit hoher Temperatur, welches über den Heizwasserzulauf 15 zugeführt wird, fließt somit zunächst durch die Eingangsöffnung des ersten Heizsegments 12 in den innenliegenden Hohlraum des ersten Heizsegments 12 und erwärmt das Heizsegment 12 entsprechend. Anschließend fließt das Heizwasser über die Ausgangsöffnung des ersten Heizelements 12 in das Verbindungsrohr 17 und vom Verbindungsrohr 17 über die Eingangsöffnung des zweiten Heizsegments 13 in den innenliegenden Hohlraum des zweiten Heizsegments 13 und erwärmt das Heizsegment 13 entsprechend. Daraufhin fließt das Heizwasser über die Ausgangsöffnung des zweiten Heizelements 13 in das weitere Verbindungsrohr 18 und vom Verbindungsrohr 18 über die Eingangsöffnung des dritten Heizsegments 14 in den innenliegenden Hohlraum des dritten Heizsegments 14 und erwärmt das dritte Heizsegment 14 entsprechend. Während des Durchgangs durch den Heizkörper 11 erniedrigt sich die Temperatur des Heizwassers durch Wärmeübertragung allmählich. Abschließend fließt das (nun entsprechend abgekühlte) Heizwasser über die Ausgangsöffnung des dritten Heizsegments 14 und den Heizwasserauslass 16 wieder ab.

Das erste Heizsegment 12 befindet sich in Gravitationsrichtung gesehen weiter unten als das zweite Heizsegment 13 und wird mehr erwärmt als das sich weiter oben befindende zweite Heizsegment 13. Das zweite Heizsegment 13 wiederum befindet sich in Gravitationsrichtung gesehen weiter unten als das dritte Heizsegment 14 und wird mehr erwärmt als das dritte Heizsegment 14.

### BEZUGSZEICHENLISTE

- 1, 11: Heizkörper
- 2: Blende
- 3, 15: Heizwasserzulauf
- 4, 16: Heizwasserauslass
- 5, 6, 12, 13, 14: Heizsegment
- 7, 17, 18: Verbindungsrohr

## Patentansprüche

1. Heizkörper (1) mit einem Heizwasserkanalsystem, innerhalb dessen Heizwasser von einem Heizwasserzulauf (3) zu einem Heizwasserauslass (4) transportierbar ist,
**dadurch gekennzeichnet, dass** das Heizwasserkanalsystem aufweist:
- genau zwei Heizsegmente (5, 6), nämlich einem ersten Heizsegment (5) und einem zweiten Heizsegment (6), mit jeweils einem innenliegenden Hohlraum zur Aufnahme von Heizwasser, die in einem betriebsbereiten Zustand des Heizkörpers (1) in Gravitationsrichtung gesehen übereinander angeordnet sind, und die jeweils eine Eingangsöffnung zur Zufuhr von Heizwasser sowie eine Ausgangsöffnung zur Abfuhr von Heizwasser aufweisen;
- ein Verbindungsrohr (7), welches die Ausgangsöffnung des ersten Heizsegments (5) mit der Eingangsöffnung des zweiten Heizsegments (6) verbindet;
wobei der Heizwasserzulauf (3) an die Eingangsöffnung des ersten Heizsegments (5) angeschlossen ist, und
wobei das zweite Heizsegment (6) im betriebsbereiten Zustand des Heizkörpers (1) in Gravitationsrichtung gesehen oberhalb des ersten Heizsegments (5) angeordnet ist;
wobei die Eingangsöffnung des ersten Heizsegments (5) an einem in Gravitationsrichtung gesehenen oberen Ende des ersten Heizsegments (5) ausgebildet ist;
wobei die Ausgangsöffnung des ersten Heizsegments (5) an einem in Gravitationsrichtung gesehenen unteren Ende des ersten Heizsegments (5) ausgebildet ist; und
wobei die Eingangsöffnung des zweiten Heizelements (6) an einem in Gravitationsrichtung gesehenen unteren Ende des zweiten Heizsegments (6) ausgebildet ist, und die Ausgangsöffnung des zweiten Heizelements (6) an einem in Gravitationsrichtung gesehenen oberen Ende des zweiten Heizsegments (6) ausgebildet und an den Heizwasserauslass (4) angeschlossen ist.

2. Heizkörper nach Anspruch 1, wobei die Heizelemente (5, 6) jeweils die Form eines flachen Quaders besitzen.

3. Heizkörper nach einem der vorhergehenden Ansprüche ferner aufweisend eine Blende (2), die sich über sämtliche Heizelemente (5, 6) erstreckt und eine Front des Heizkörpers (1) bildet.

4. Heizkörper nach Anspruch 3, wobei das erste Heizelement (5) eine der Blende (2) gegenüber liegende Rückseite aufweist, wobei zumindest ein Teil des Verbindungsrohrs (7) entlang dieser Rückseite verläuft.

5. Heizkörper (11) mit einem Heizwasserkanalsystem, innerhalb dessen Heizwasser von einem Heizwasserzulauf (3, 15) zu einem Heizwasserauslass (4, 16) transportierbar ist,
**dadurch gekennzeichnet, dass** das Heizwasserkanalsystem aufweist:
- genau drei Heizsegmente (12, 13, 14), nämlich ein erstes Heizsegment (12), ein zweites Heizsegment (13) und ein drittes Heizsegment (14), mit jeweils einem innenliegenden Hohlraum zur Aufnahme von Heizwasser, die in einem betriebsbereiten Zustand des Heizkörpers (11) in Gravitationsrichtung gesehen übereinander angeordnet sind, und die jeweils eine Eingangsöffnung zur Zufuhr von Heizwasser sowie eine Ausgangsöffnung zur Abfuhr von Heizwasser aufweisen;
- ein Verbindungsrohr (17), welches die Ausgangsöffnung des ersten Heizsegments (12) mit der Eingangsöffnung des zweiten Heizsegments (13) verbindet;
wobei:
- die Eingangsöffnung des ersten Heizsegments (12) an einem in Gravitationsrichtung gesehenen oberen Ende des ersten Heizsegments (12) ausgebildet ist,
- der Heizwasserzulauf (15) an die Eingangsöffnung des ersten Heizsegments (12) angeschlossen ist,
- das zweite Heizsegment (13) im betriebsbereiten Zustand des Heizkörpers (11) in Gravitationsrichtung gesehen oberhalb des ersten Heizsegments (12) angeordnet ist,
- das dritte Heizsegment (14) im betriebsbereiten Zustand des Heizkörpers (11) in Gravitationsrichtung gesehen oberhalb des zweiten Heizsegments (13) angeordnet ist,
- die Eingangsöffnung des zweiten Heizsegments (13) an einem in Gravitationsrichtung gesehenen oberen Ende des zweiten Heizsegments (13) ausgebildet ist;
- die Ausgangsöffnung des zweiten Heizsegments (13) an einem in Gravitationsrichtung gesehenen unteren Ende des zweiten Heizsegments (13) ausgebildet ist;
- die Eingangsöffnung des dritten Heizsegments (14) an einem in Gravitationsrichtung gesehenen unteren Ende des dritten Heizsegments (14) ausgebildet ist;
- die Ausgangsöffnung des dritten Heizelements (14) an einem in Gravitationsrichtung gesehenen oberen Ende des dritten Heizsegments (14) ausgebildet und an den Heizwasserauslass (16) angeschlossen ist;
- ein weiteres Verbindungsrohr (18) die Ausgangsöffnung des zweiten Heizsegments (13) mit der Eingangsöffnung des dritten Heizsegments (14) verbindet.

6. Heizkörper nach Anspruch 5, wobei die Heizelemente (12, 13, 14) jeweils die Form eines flachen Quaders besitzen.

## Claims

1. Heater (1) having a heating water channel system within which heating water is able to be transported from a heating water intake (3) to a heating water outlet (4),
**characterized in that** the heating water channel system has:
- precisely two heating segments (5, 6), specifically a first heating segment (5) and a second heating segment (6), with in each case an internal cavity for receiving heating water, which segments are arranged one above the other as seen in the direction of gravity in an operationally ready state of the heater (1) and have in each case an input opening for feeding heating water and an output opening for discharging heating water;
- a connecting tube (7) which connects the output opening of the first heating segment (5) to the input opening of the second heating segment (6);
wherein the heating water intake (3) is connected to the input opening of the first heating segment (5), and
wherein the second heating segment (6) is arranged above the first heating segment (5) as seen in the direction of gravity in the operationally ready state of the heater (1);
wherein the input opening of the first heating element (5) is formed at an upper end of the first heating segment (5) as seen in the direction of gravity;
wherein the output opening of the first heating element (5) is formed at a lower end of the first heating segment (5) as seen in the direction of gravity; and
wherein the input opening of the second heating element (6) is formed at a lower end of the second heating segment (6) as seen in the direction of gravity, and the output opening of the second heating element (6) is formed at an upper end of the second heating segment (6) as seen in the direction of gravity and is connected to the heating water outlet (4).

2. Heater according to Claim 1, wherein the heating elements (5, 6) have in each case the shape of a flat cuboid.

3. Heater according to one of the preceding claims, further having a cover plate (2) which extends over all the heating elements (5, 6) and forms a front of the heater (1).

4. Heater according to Claim 3, wherein the first heating element (5) has a rear side opposite the cover plate (2), wherein at least part of the connecting tube (7) runs along said rear side.

5. Heater (11) having a heating water channel system within which heating water is able to be transported from a heating water intake (3, 15) to a heating water outlet (4, 16),
**characterized in that** the heating water channel system has:
- precisely three heating segments (12, 13, 14), specifically a first heating segment (12), a second heating segment (13) and a third heating segment (14), with in each case an internal cavity for receiving heating water, which segments are arranged one above the other as seen in the direction of gravity in an operationally ready state of the heater (11) and have in each case an input opening for feeding heating water and an output opening for discharging heating water;
- a connecting tube (17) which connects the output opening of the first heating segment (12) to the input opening of the second heating segment (13) ;
wherein:
- the input opening of the first heating segment (12) is formed at an upper end of the first heating segment (12) as seen in the direction of gravity;
- the heating water intake (15) is connected to the input opening of the first heating segment (12);
- the second heating segment (13) is arranged above the first heating segment (12) as seen in the direction of gravity in the operationally ready state of the heater (11);
- the third heating segment (14) is arranged above the second heating segment (13) as seen in the direction of gravity in the operationally ready state of the heater (11);
- the input opening of the second heating element (13) is formed at an upper end of the second heating segment (13) as seen in the direction of gravity;
- the output opening of the second heating element (13) is formed at a lower end of the second heating segment (13) as seen in the direction of gravity;
- the input opening of the third heating element (14) is formed at a lower end of the third heating segment (14) as seen in the direction of gravity;
- the output opening of the third heating element (14) is formed at an upper end of the third heating segment (14) as seen in the direction of gravity and is connected to the heating water outlet (16);
- a further connecting tube (18) connects the output opening of the second heating segment (13) to the input opening of the third heating segment (14) .

6. Heater according to Claim 5, wherein the heating elements (12, 13, 14) have in each case the shape of a flat cuboid.

## Revendications

1. Radiateur (1) avec un réseau de canaux d'eau chaude, à l'intérieur duquel de l'eau chaude peut être transportée d'une arrivée d'eau chaude (3) à une sortie d'eau chaude (4),
**caractérisé en ce que** le réseau de canaux d'eau chaude comprend:
- exactement deux segments chauffants (5, 6), à savoir un premier segment chauffant (5) et un deuxième segment chauffant (6), avec chacun une cavité interne respective destinée à contenir de l'eau chaude, qui dans un état prêt à fonctionner du radiateur (1) sont disposés l'un au-dessus de l'autre dans le sens de la gravité et qui présentent chacun une ouverture d'entrée pour l'arrivée d'eau chaude ainsi qu'une ouverture de sortie pour l'évacuation d'eau chaude ;
- un tube de connexion (7), qui relie l'ouverture de sortie du premier segment chauffant (5) à l'ouverture d'entrée du deuxième segment chauffant (6);
dans lequel l'arrivée d'eau chaude (3) est raccordée à l'ouverture d'entrée du premier segment chauffant (5), et
dans lequel le deuxième segment chauffant (6) est disposé, dans l'état prêt à fonctionner du radiateur (1), au-dessus du premier segment chauffant (5) dans le sens de la gravité ;
dans lequel l'ouverture d'entrée du premier segment chauffant (5) est formée à une extrémité supérieure, vue dans le sens de la gravité, du premier segment chauffant (5);
dans lequel l'ouverture de sortie du premier segment chauffant (5) est formée à une extrémité inférieure, vue dans le sens de la gravité, du premier segment chauffant (5);
dans lequel l'ouverture d'entrée du deuxième segment chauffant (6) est formée à une extrémité inférieure, vue dans le sens de la gravité, du deuxième segment chauffant (6) et l'ouverture de sortie du deuxième segment chauffant (6) est formée à une extrémité supérieure, vue dans le sens de la gravité, du deuxième segment chauffant (6) et est raccordée à la sortie d'eau chaude (4).

2. Radiateur selon la revendication 1, dans lequel les éléments chauffants (5, 6) présentent chacun la forme d'un parallélépipède plat.

3. Radiateur selon l'une quelconque des revendications précédentes, présentant en outre un écran (2), qui s'étend sur tous les éléments chauffants (5, 6) et forme un front du radiateur (1).

4. Radiateur selon la revendication 3, dans lequel le premier element chauffant (5) comprend une face arrière opposée à l'écran (2), au moins une partie du tube de connexion (7) s'étendant le long de cette face arrière.

5. Radiateur (11) avec un réseau de canaux d'eau chaude, à l'intérieur duquel de l'eau chaude peut être transportée d'une arrivée d'eau chaude (3, 15) à une sortie d'eau chaude (4, 16),
**caractérisé en ce que** le réseau de canaux d'eau chaude comprend:
- exactement trois segments chauffants (12, 13, 14), à savoir un premier segment chauffant (12), un deuxième segment chauffant (13) et un troisième segment chauffant (14), avec chacun une cavité interne destinée à contenir de l'eau chaude, qui dans un état prêt à fonctionner du radiateur (11) sont disposés l'un au-dessus de l'autre dans le sens de la gravité et qui présentent chacun une ouverture d'entrée pour l'arrivée d'eau chaude ainsi qu'une ouverture de sortie pour l'évacuation d'eau chaude;
- un tube de connexion (17), qui relie l'ouverture de sortie du premier segment chauffant (12) à l'ouverture d'entrée du deuxième segment chauffant (13) ;
dans lequel:
- l'ouverture d'entrée du premier segment chauffant (12) est formée à une extrémité supérieure, vue dans le sens de la gravité, du premier segment chauffant (12);
- l'arrivée d'eau chaude (15) est raccordée à l'ouverture d'entrée du premier segment chauffant (12);
- le deuxième segment chauffant (13) est disposé, dans l'état prêt à fonctionner du radiateur (11), au-dessus du premier segment chauffant (12) dans le sens de la gravité;
- le troisième segment chauffant (14) est disposé, dans l'état prêt à fonctionner du radiateur (11), au-dessus du deuxième segment chauffant (13) dans le sens de la gravité;
- l'ouverture d'entrée du deuxième segment chauffant (13) est formée à une extrémité supérieure, vue dans le sens de la gravité, du deuxième segment chauffant (13) ;
- l'ouverture de sortie du deuxième segment chauffant (13) est formée à une extrémité inférieure, vue dans le sens de la gravité, du deuxième segment chauffant (13) ;
- l'ouverture d'entrée du troisième segment chauffant (14) est formée à une extrémité inférieure, vue dans le sens de la gravité, du troisième segment chauffant (14) ;
- l'ouverture de sortie du troisième élément chauffant (14) est formée à une extrémité supérieure, vue dans le sens de la gravité, du troisième segment chauffant (14) et est raccordée à la sortie d'eau chaude (16);
- un autre tube de connexion (18) relie l'ouverture de sortie du deuxième segment chauffant (13) à l'ouverture d'entrée du troisième segment chauffant (14) .

6. Radiateur selon la revendication 5, dans lequel les éléments chauffants (12, 13, 14) présentent chacun la forme d'un parallélépipède plat.
